(19) Europäisches Patentamt
European Patent Office
Office européen des brevets

(11) Publication number: **0 156 372**
**B1**

(12) **EUROPEAN PATENT SPECIFICATION**

(45) Date of publication of patent specification: **08.11.89**

(51) Int. Cl.$^4$: **G 11 B 7/26,** G 11 B 7/24

(21) Application number: **85103642.6**

(22) Date of filing: **27.03.85**

(54) **Process for producing plastic information-recording medium and resin composition used therefor.**

(30) Priority: **28.03.84 JP 58321/84**

(43) Date of publication of application:
**02.10.85 Bulletin 85/40**

(45) Publication of the grant of the patent:
**08.11.89 Bulletin 89/45**

(84) Designated Contracting States:
**FR NL**

(56) References cited:
**EP-A-0 062 366**
**FR-A-2 457 538**

(73) Proprietor: **HITACHI, LTD.**
**6, Kanda Surugadai 4-chome Chiyoda-ku**
**Tokyo (JP)**

(73) Proprietor: **Hitachi Maxell Ltd.**
**No 1-1-88, Ushitora Ibaraki-shi**
**Osaka-fu (JP)**

(72) Inventor: **Sudo, Ryoichi**
**36-8, Atawa-2-chome**
**Yokosuka-shi (JP)**
Inventor: **Miwa, Hiroaki**
**203-go, Hitachi-Jonan Haitsu 3-7, Jonan-5-chome**
**Fujisawa-shi (JP)**
Inventor: **Tajima, Tetsuo**
**0-55-1-4, Shonan-Life-Town**
**1045, Endo Fujisawa-shi (JP)**
Inventor: **Watanabe, Takeshi**
**21-go, Dainiyoshiharaso 1208, Shimokuratacho**
**Totsuka-ku Yokohama (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

**EP 0 156 372 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

This invention relates to a process for producing a plastic information-recording medium, the plastic information-recording medium thus produced and a light- or radiation-curable resin composition used therefor.

Plastic information-recording mediums used for digital audio discs, video discs, optical discs, magnetic optical discs, etc. bear information patterns by means of grooves and/or pits on surfaces of transparent plastic substrates. Such plastic information-recording mediums are produced by casting a radiation-curable resin composition into a cavity formed by a stamper having an information pattern forming surface thereon and a transparent plastic plate, curing the resin composition by irradiation with a radiation through the transparent plastic plate, and taking off the stamper and the transparent plastic plate.

According to FR—A—2,457,538 (=US—A—4,477,328), there is used a radiation-curable resin composition comprising an acrylate or methacrylate oligomer having 1 to 4 acrylate or methacrylate groups per molecule such as an alkylene-bis(phenoxyalkylacrylate) represented by the formula:

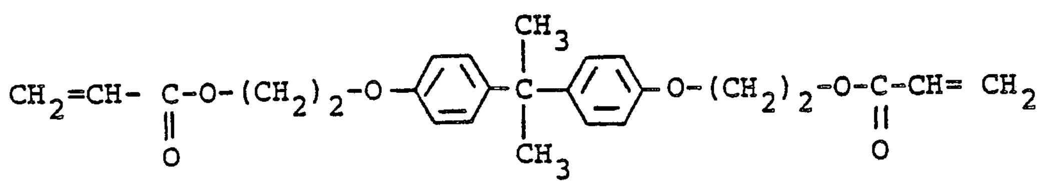

or an alkylene-bis(phenoxyalkylmethacrylate) represented by the formula:

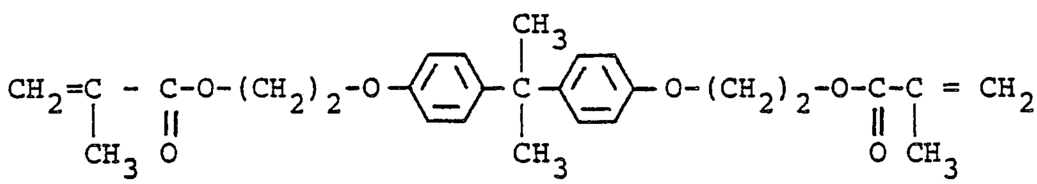

and 0.1 to 0.5% by weight of a photopolymerization initiator, the viscosity of the resin composition being 1 to 15 Pa.s, But according to said patent, the molding conditions should be selected severely and the resulting molded article is insufficient in mechanical strength, heat resistance, moisture resistance and rather large in optical anisotropy.

EP—A—62 366 discloses a process for producing a substrate having grooves thereon by forming a thin film of photocurable resin on a transparent substrate, wherein the resin used is a diacrylate or dimethacrylate of alkanediol such as 1,6-hexanediol diacrylate or dimethacrylate in an amount of 95 to 99.9 weight percent, the remainder being usual auxiliary substances.

Summary of the Invention

It is an object of this invention to provide a process for producing a plastic information-recording medium good in mechanical strength, heat resistance and moisture resistance and small in optical anisotropy overcoming the disadvantages of the prior art, the plastic information-recording medium thus produced and a light- or radiation-curable resin composition used therefor.

This invention provides a process for producing a plastic information-recording medium, comprising the steps of:

casting a light- or radiation-curable resin composition containing acryl or methacryl groups into a cavity formed by a stamper having an information pattern forming surface thereon and a releasable plate having a smooth surface thereon, at least one of the stamper and the releasable plate being transparent,

irradiating a light or radiation through at least one of transparent stamper and transparent releasable plate to cure the resin composition, and

removing the stamper and the releasable plate,

characterized in that the light- or radiation-curable resin composition comprises:

(i) a compound (I) having 4 or more acryl or methacryl groups in one molecule and a viscosity of 3 Pa.s or less at 25°C,

(ii) a compound (II) represented by the formula:

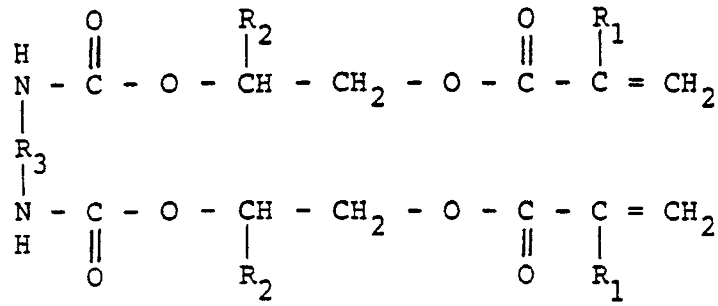

(II)

wherein $R_1$ is hydrogen or a methyl group; $R_2$ is hydrogen, an alkyl group having 1 to 5 carbon atoms, or a group of the formula:

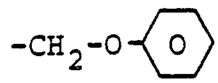 ; $R_3$ is 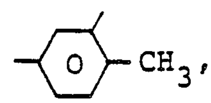,

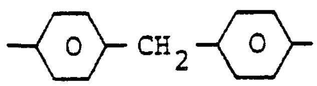, 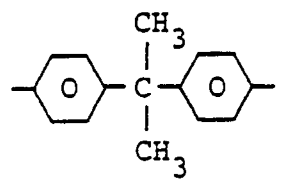, 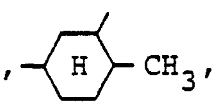,

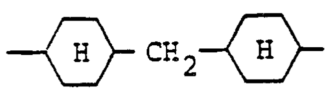, 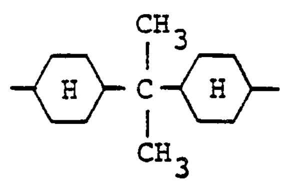, 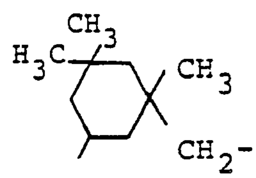, or $-(CH_2)_m-$

in which m is an integer of 3 to 10,

(iii) a compound (III) of the formula:

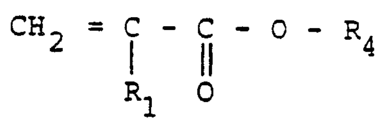

(III)

wherein $R_1$ is as defined above; and $R_4$ is a hydrocarbon group having 6 to 16 carbon atoms, and

(iv) a photopolymerization initiator in an amount of 0.5 to 10 parts by weight per 100 parts by weight of the total of the compounds (I), (II) and (III), and

the compounds (I), (II) and (III) being used in amounts in the closed area of lines A—B—C—D—E—A in the triangular diagram of Fig. 1, wherein individual points A, B, C, D and E have the following values in percents by weight:

| | Compound (I) | Compound (II) | Compound (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

Brief Description of the Drawings

Fig. 1 is a triangular diagram showing usable amounts of the compounds (I), (II) and (III) for producing the plastic information-recording medium according to this invention.

Figs. 2—1 through 2—3 are cross-sectional views showing a process for producing the plastic information-recording medium according to this invention.

Fig. 3 is a cross-sectional view showing a major portion of a laminate-type light read system.

Figs. 4—1 and 4—2 are a perspective with partial cross-sectional view and a cross-sectional view of a sandwich-type light read system.

Description of the Preferred Embodiments

The light- or radiation-curable resin composition usable for producing a plastic information-recording medium comprises compounds (I), (II) and (III) and a photopolymerization initiator.

The compound (I) has 4 or more, preferably 5 or more, more preferably 5 to 6, acryl or methacryl groups in one molecule and a viscosity of 3 Pa.s or less, preferably 3 to 0.01 Pa.s, more preferably 3 to 0.1 Pa.s, at 25°C..

Examples of the compound (I) are pentaerythritol tetracrylate, pentaerythritol tetramethacrylate, dipentaerythritol hexaacrylate, dipentaerythritol hexamethacrylate, a dipentaerythritol derivative hexacrylate or hexamethacrylate represented by the formula:

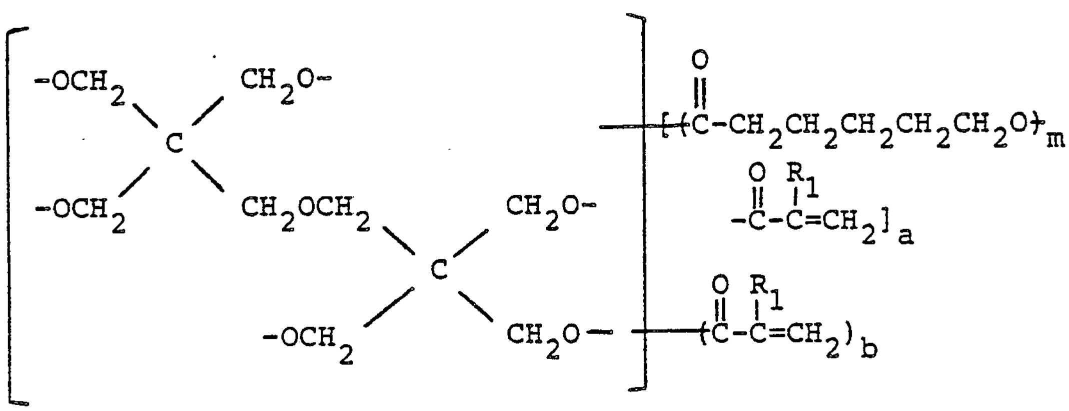

wherein $R_1$ is hydrogen or a methyl group; m is an integer of 1 or more; a is an integer of 1 or more; and b is zero or an integer of 1 or more. The dipentaerythritol derivative hexaacrylates or hexamethacrylates are available commercially under the tradename of DPCA—20, 30, 60, or 120 manufactured by Nippon Kayaku Co., Ltd. as follows:

DPCA—20 (m=1, a=2, b=4)

DPCA—30 (m=1, a=3, b=3)

DPCA—60 (m=1, a=6, b=0)

DPCA—120 (m=2, a=6 b=0)

These compounds can be used alone or as a mixture thereof.

The compound (II) is represented by the formula:

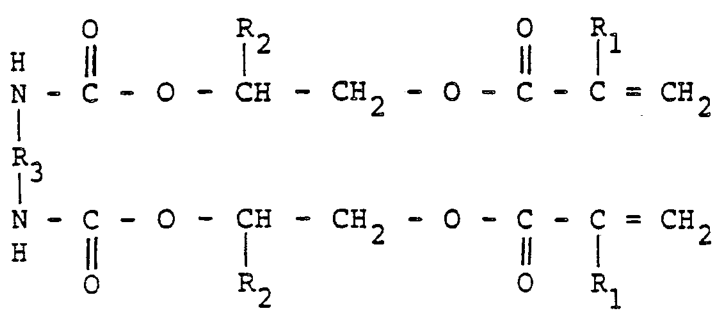

(II)

wherein $R_1$ is hydrogen or a methyl group; $R_2$ is hydrogen, an alkyl group having 1 to 5 carbon atoms, or a group of the formula:

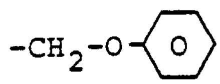 ; $R_3$ is 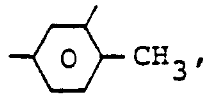,

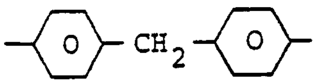, 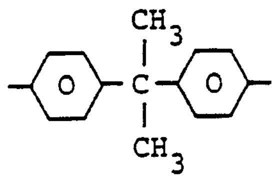, 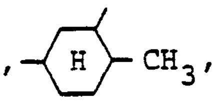,

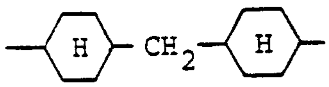, 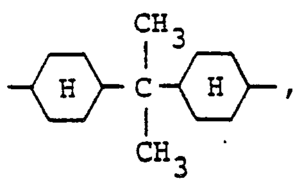, 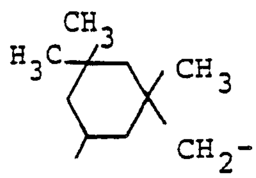, or $-(CH_2)_m-$

in which m is an integer of 3 to 10. In the definition of $R_3$, the following groups are more preferable:

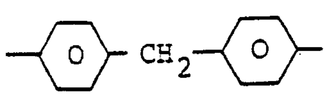, 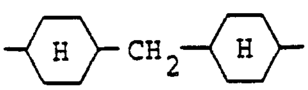 and 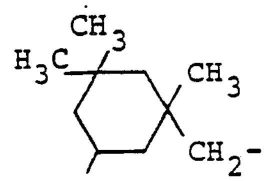.

Examples of the compound (II) are as follows:

$R_3$ in the formula (III) =

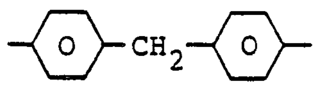:

a reaction product of 1,1′-methylenebis(4-isocyanatobenzene (1 mole) and 2-hydroxyethyl acrylate (2 moles),

a reaction product of 1,1′-methylenebis(4-isocyanatobenzene) (1 mole) and 2-hydroxyethyl methacrylate (2 moles);

$R_3$ in the formula (II) =

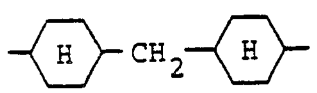:

a reaction product of 1,1′-methylenebis(4-isocyanatocyclohexane) (1 mole) and 2-hydroxyethyl acrylate (2 moles),

a reaction product of 1,1′-methylenebis(4-isocyanatocyclohexane) (1 mole) and 2-hydroxyethyl methacrylate (2 moles),

a reaction product of 1,1′-methylenebis(4-isocyanatocyclohexane) (1 mole) and 2-hydroxy-3-phenoxypropyl acrylate (2 moles),

a reaction product of 1,1′-methylenebis(4-isocyanatocyclohexane) (1 mole) and 2-hydroxy-3-phenoxypropyl methacrylate (2 moles),

a reaction product of 1,1′-methylenebis(4-isocyanatocyclohexane) (1 mole) and 2-hydroxypropyl acrylate (2 moles),

a reaction product of 1,1′-methylenebis(4-isocyanatocyclohexane) (1 mole) and 2-hydroxypropyl methacrylate (2 moles),

a reaction product of 1,1′-methylenebis(4-isocyanatocyclohexane) (1 mole) and 2-hydroxybutyl acrylate (2 moles),

a reaction product of 1,1′-methylenebis(4-isocyanatocyclohexane) (1 mole) and 2-hydroxybutyl methacrylate (2 moles);

$R_3$ in the formula (II) =

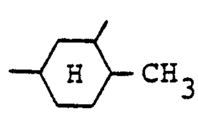

a reaction product of 2,4-methylcyclohexane diisocyanate (1 mole) and 2-hydroxyethyl acrylate (2 moles),

a reaction product of 2,4-methylcyclohexane diisocyanate (1 mole) and 2-hydroxyethyl methacrylate (2 moles);

$R_3$ in the formula (II) =

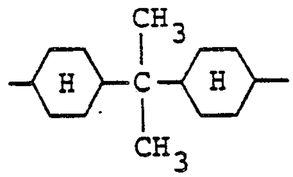

a reaction product of 2,2-bis(4-isocyanatocyclohexyl) propane (1 mole) and 2-hydroxybutyl acrylate (2 moles),

a reaction product of 2,2-bis(4-isocyanatocyclohexyl) propane (1 mole) and 2-hydroxybutyl methacrylate (2 moles);

$R_3$ in the formula (II) =

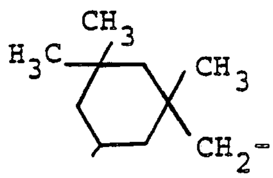 :

a reaction product of isophorone diisocyanate (1 mole) and 2-hydroxyethyl acrylate (2 moles),

a reaction product of isophorone diisocyanate (1 mole) and 2-hydroxyethyl methacrylate (2 moles),

a reaction product of isophorone diisocyanate (1 mole) and 2-hydroxypropyl acrylate (2 moles),

a reaction product of isophorone diisocyanate (1 mole) and 2-hydroxypropyl methacrylate (2 moles),

a reaction product of isophorone diisocyanate (1 mole) and 2-hydroxybutyl acrylate (2 moles),

a reaction product of isophorone diisocyanate (1 mole) and 2-hydroxybutyl methacrylate (2 moles),

a reaction product of isophorone diisocyanate (1 mole) and 2-hydroxy-3-phenoxypropyl acrylate (2 moles),

a reaction product of isophorone diisocyanate (1 mole) and 2-hydroxy-3-phenoxypropyl methacrylate (2 moles), etc.

These compounds can be used alone or as a mixture thereof.

The compound (III) is represented by the formula:

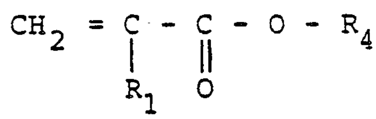 (III)

wherein $R_1$ is as defined above; and $R_4$ is a hydrocarbon group having 6 to 16 carbon atoms.

Preferable examples of $R_4$ are

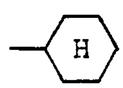 , 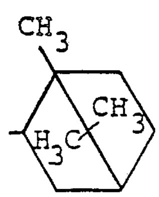

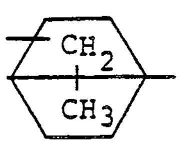 , 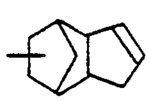 , 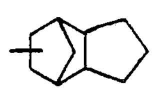 , n-$CH_3(CH_2)_5$-,

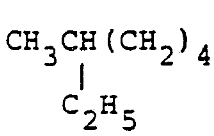 , n-$CH_3(CH_2)_9$- , $CH_3(CH_2)_{11}$-, and $CH_3(CH_2)_{12}$-.

More preferable examples of $R_4$ are

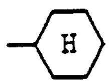, 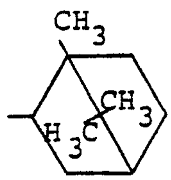, 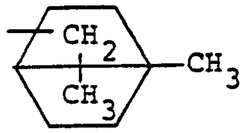, 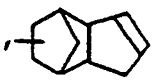 and 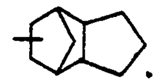.

Examples of the compound (III) are cyclohexyl acrylate, cyclohexyl methacrylate

($R_4$ = 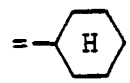 );

bornyl methacrylate

($R_4$ = 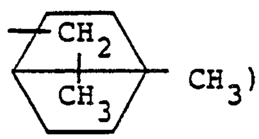 );

dicyclopentenyl acrylate, dicyclopentenyl methacrylate

($R_4$ = 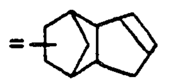 );

tricyclodecanyl acrylate, tricyclodecanyl methacrylate

($R_4$ = 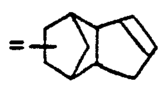 );

n-hexyl acrylate, n-hexyl methacrylate ($R_4$ = n-$CH_3(CH_2)_5$—); 2-ethylhexyl acrylate, 2-ethylhexyl methacrylate

$$(R_4 = CH_3\underset{\underset{C_2H_5}{|}}{C}H(CH_2)_4-);$$

n-decyl acrylate, n-decyl methacrylate ($R_4$ = n-$CH_3(CH_2)_9$—); lauryl acrylate, lauryl methacrylate ($R_4$ = $CH_3(CH_2)_{11}$—); tridecyl acrylate, tridecyl methacrylate ($R_4$ = $CH_3(CH_2)_{12}$—), etc. These compounds can be used alone or as a mixture thereof.

The compounds (I), (II) and (III) are used in amounts in the closed area of lines A—B—C—D—E—A (including the values on the lines) in the triangular diagram of Fig. 1, wherein individual points A, B, C, D, and E have the following values in percents by weight:

| | Compound (I) | Compound (II) | Compound (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

As mentioned above, the compound (I) is used in an amount of 5 to 50% by weight. When the amount of the compound (I) is less than 5% by weight, the viscosity of the resin composition becomes high so as to make the casting operation difficult, the resulting cured product, i.e., plastic information-recording medium, shows a warp when used at high temperatures (e.g. 70°C or higher), and is lowered in elastic modulus and in surface hardness. On the other hand, when the amount of the compound (I) is more than 50% by weight, the resulting cured product is lowered in mechanical strength (e.g., tensile strength, elastic modulus) and undesirably increases in optical strain so as to lose practical use. Particularly preferable range of the amount of the compound (I) is 10 to 40% by weight.

The compound (II) is used in an amount of 20 to 90% by weight. When the amount of the compound (II) is less than 20% by weight, the resulting cured product (plastic information-recording medium) is lowered in mechanical strength (e.g. tensile strength, elastic modulus). On the other hand, when the amount of the compound (II) is more than 90% by weight, the resulting cured product undesirably shows a warp when used at high temperatures (e.g. 70°C or higher). Particularly preferable range of the amount of the compound (II) is 83 to 30% by weight.

The compound (III) is used in an amount of 5 to 50% by weight. When the amount of the compound (III) is less than 5% by weight, the resulting cured product (plastic information-recording medium) is worsened in optical strain and shows a larger warp due to larger moisture absorption. On the other hand, when the amount of the compound (III) is larger than 50% by weight, the resulting cured product is undesirably lowered in mechanical strength (e.g. tensile strength, elastic modulus). Particularly preferable range of the amount of the compound (III) is 7 to 40% by weight.

As the photopolymerization initiator, there can be used benzyls such as benzyl, etc.; benzoins such as benzoin, benzoin ethyl ether, benzoin isopropyl ether, benzoin isobutyl ether, etc.; benzophenones such as benzophenone, 4-methoxybenzophenone, etc.; acetophenones such as acetophenone, 2,2-diethoxyacetophenone, etc.; thioxanthones such as 2-chlorothioxanthone, 2-methylthioxanthone, etc.; anthraquinones such as 2-ethylanthraquinone, 2-methylanthraquinone, etc.; benzyl dimethyl ketal, 1-hydroxycyclohexylphenyl ketone, 2-hydroxy-2-methyl-1-phenylpropane-1-on, 1-(4-isopropylphenyl)-2-hydroxy-2-methylpropane-1-on, etc. These compounds can be used alone or as a mixture thereof. Among them, benzoin isopropyl ether, benzoin isobutyl ether, 1-hydroxycyclohexylphenyl ketone, and 1-(4-isopropylphenyl)-2-hydroxy-2-methylpropane-1-on are more preferable.

The photopolymerization initiator is used in an amount of 0.5 to 10 parts by weight, preferably 0.5 to 5 parts by weight, more preferably 0.7 to 3 parts by weight, based on 100 parts by weight of the total of the compounds (I), (II) and (III). When the amount is less than 0.5 part by weight, curing by light or radiation becomes insufficient, whereas when the amount is more than 10 parts by weight, the resulting cured article is lowered in mechanical strength.

The process for producing the plastic information-recording medium is explained referring to Figs. 2—1 through 2—3.

In Fig. 2—1, numeral 1 denotes a stamper, numeral 2 a releasable plate, numeral 3—1 a cavity and numeral 4 an inlet of a resin composition.

The thickness of the cavity formed between the releasable plate and the stamper is preferably 0.8 to 2.0 mm, more preferably 0.8 to 1.5 mm. When the thickness of the cavity is less than 0.8 mm, the resulting plastic information-recording medium having grooves and/or holes (pits) for carrying information pattern produced from the light- or radiation-curable resin composition is too thin to show desirable mechanical strength and has a tendency to increase noises at the time of reading information due to foreign particles adhered to surfaces having no information. On the other hand, when the thickness of the cavity is more than 2.0 mm, the resulting plastic information-recording medium becomes too thick and too heavy, and undesirably has uncured portions therein.

The stamper which has an information pattern forming surface thereon in contact with the cavity can be made from the following materials:

(a) a metal which does not transmit a light or radiation and is not so good in releasability, e.g. Ni, Cr, Pd, etc.;

(b) a polymer which does not transmit a light or radiation but is good in releasability, e.g. polypropylene, polyfluoroethylene, polyfluoroethylene-propylene, etc.;

(c) a material which transmits a light or radiation but is not so good in releasability, e.g. glass, polycarbonate, poly(methyl methacrylate), or the like (a surface of a plate made from such a material being covered by a layer made from a light- or radiation-curable resin composition capable of forming an information pattern); and

(d) a material which transmits a light or radiation and is good in releasability, e.g. polypentene.

When the stamper made from the material (a) or (c) is used, it is preferable to treat the information pattern forming surface with a releasing agent such as dimethylpolysiloxane, methylhydrogenpolysiloxane, or the like before use. The use of the material (d) is preferable.

The releasable plate which has a smooth surface in contact with the cavity can be made from the following materials:

(e) the same material as (a) mentioned above;

(f) the same material as (b) mentioned above;

(g) a glass plate; and

(h) the same material as (d) mentioned above.

A light- or radiation-curable resin composition is cast into the cavity 3—1 through the inlet 4 and is subjected to irradiation with a light or radiation 5 as shown in Fig. 2—2. In Fig. 2—2, numeral 3—2 is the resin composition.

When the stamper is made from the non-transparent material (a) or (b), the releasable plate should be made from the transparent material (g) or (h). When the releasable plate is made from the non-transparent material (e) or (f), the stamper should be made from the transparent material (c) or (d). In such cases, the resin composition is irradiated by a light or radiation through the transparent releasable plate or the transparent stamper and should have the components (I), (II) and (III) in amounts as defined above together with the photopolymerization initiator.

When the stamper is made from the transparent material (c) or (d) and the releasable plate is made from the transparent material (g) or (h), the light or radiation 5 can be irradiated either through one of the stamper and the releasable plate or through both the stamper and the releasable plate as shown in Fig. 2—2. When the light or radiation 5 is irradiated through both the transparent stamper and the transparent releasable plate, a conventional light- or radiation-curable resin composition can be used, but the use of the special resin composition comprising the compounds (I), (II) and (III) together with the photopolymerization initiator is more preferable. Needless to say, when the light or radiation is irradiated through one side, the special resin composition as mentioned above should be used. Further, when the special resin composition comprising the compounds (I), (II) and (III) and the photopolymerization initiator is irradiated with a light or radiation 5 from the both sides as shown in Fig. 2—2, the resulting cured plastic information-recording medium shows unexpected excellent properties in preventing warp even after subjected to a heat treatment at 100°C for 1 hour. Therefore, the irradiation from both sides, i.e., both the transparent releasable plate and the transparent stamper, is more preferable.

As the light or radiation, there can be used actinic light such as visible light, ultraviolet light, X-rays, electron beams, etc. The use of ultraviolet light is better from the viewpoint of practical use. Typical sources of actinic radiation include a high-pressure mercury lamp, a low-pressure mercury lamp, a xenon lamp, a metal halide lamp, etc., in the case of ultraviolet light.

Suitable irradiation amounts are 10 to 500 $mW/cm^2$ in the wavelengths of 320 to 400 nm.

After curing by irradiation with light or radiation, the releasable plate 2 and the stamper 1 are removed to give the desired plastic information-recording medium 3—3 as shown in Fig. 2—3.

The plastic information-recording medium thus produced is small in optical strain, transparent and has good moisture resistance which prevents the medium from warpage due to moisture absorption, good heat resistance which prevents the medium from warpage due to the use at high temperatures such as 70°C or higher, and good mechanical strength which prevents the medium from breakdown due to impact.

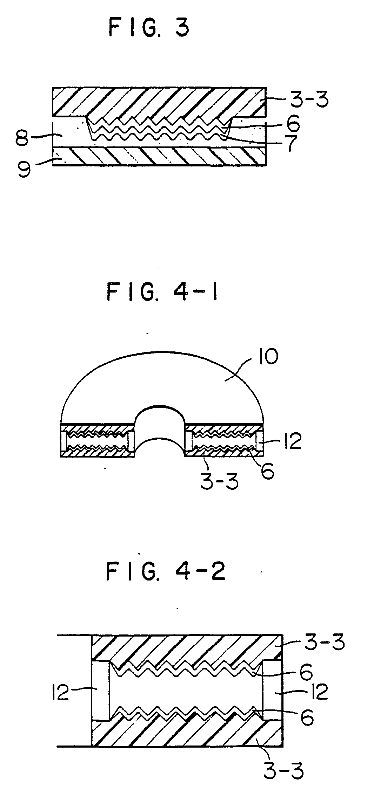

By using the plastic information-recording medium thus produced, optical disc recording mediums as shown in Figs. 3 and 4—1 and 4—2 can be constructed by a conventional method including the formation of recording film of Te-Sn, Te-Se, or the like by, e.g., vacuum evaporation, and the like on the information pattern forming surface of the plastic information-recording medium.

This invention is illustrated by way of the following Examples, in which all parts and percents are by weight unless otherwise specified. In the following Examples, the following properties were evaluated as follows:

1) Curing characteristics: the state of curing was judged by observing the surface appearance of a cured article.

2) Retardation: retardation was evaluated by measuring a single pass at a wavelength of 830 nm according to Seitaro Tsuboi: "Polarization Microscope" page 151, (1959), Iwanami Shoten, Publishers.

3) Heat resistance: a cured plate of a resin of 45 mm long with 5 mm wide and 1 mm thick was fixed at one end and loaded at another end with a load of 10 g and heated at a temperaure rise rate of 10°C/30 min to measure the temperature beginning the deformation (i.e., evaluated by the heat distortion temperature).

4) Tensile strength: a dumbbell specimen prepared according to JIS K—6745 was used to measure tensile strength at break by using a tensilometer.

Transparent plates having grooves and pits thereon are preferable when they are good in curing characteristics, and have the retardation of 10 mm or less, the heat resistance of 70°C or higher and the tensile strength of 4905 $N/cm^2$ or more. When the above-mentioned values are not satisfied, optical disc recording mediums are increased in signal noises, and suffered from the warpage under high temperatures or breakdown during operation.

Example 1

A light- or radiation-curable resin composition (Sample No. 1) was prepared by mixing 40.8 parts of dipentaerythritol derivative hexacrylate (DPCA 30, a trade name, mfg. by Nippon Kayaku Co., Ltd.) as the compound (I), 30.6 parts of a reaction product of isophorone diisocyanate (1 mole) and 2-hydroxyethyl methacrylate (2 moles) as the compound (II), 28.6 parts of isobornyl methacrylate as the compound (III) and 2 parts of benzoin isopropyl ether as the photopolymerization initiator.

A stamper 1 was made of nickel as shown in Fig. 2—1 so as to have grooves (depth 0.09 μm, width 0.40 μm) and pits (or holes) (depth 0.16 μm, width 0.60 μm) and an outer diameter of 300 mm. A releasable plate having a smooth surface was prepared by baking a dimethylpolysiloxane releasing agent on a surface of glass circular plate having an outer diameter of 300 mm with a thickness of 10 mm.

A cavity 3—1 with 1.3 mm thick was made by combining the stamper 1 and the releasable plate 2 with the smooth surface in contact with the cavity as shown in Fig. 2—1. Into the cavity 3—1, the resin composition (Sample No. 1) was cast through an inlet 4 under vacuum. Ultraviolet light of wavelength of 320 to 400 nm was irradiated from a high pressure mercury lamp with an intensity of 400 mW/$cm^2$ through the releasable plate 2 for 40 seconds to cure the resin composition. Then, the releasable plate 2 and the stamper 1 were removed to give a plastic information-recording medium 3—3 as shown in Fig. 2—3.

The plastic information-recording medium thus produced had a thickness of 1.2 mm and precise replicas of the grooves and pits of the stamper.

Properties of the plastic information-recording medium were as follows: the optical retardation at a wavelength of 830 nm was 0.5 nm, the heat distortion temperature was 110°C, the tensile strength was 5396 N/$cm^2$, the light transmittance at a wavelength of 830 nm was 99%, the warpage of the plate was 0.1 mm/ 300 mm in diameter or less. These data show that the medium is excellent as a substrate for optical disc.

Example 2

A light- or radiation-curable resin composition (Sample No. 2) was prepared by mixing 40.8 parts of dipentaerythritol derivative hexaacrylate (DPCA 60, a trade name, mfd. by Nippon Kayaku Co., Ltd.) as the compound (I), 30.6 parts of a reaction product of 1,3-bis(isocyanatomethyl)cyclohexane (1 mole) and 2-hydroxyethyl methacrylate (2 moles) as the compound (II), 28.6 parts of cyclohexyl methacrylate as the compound (III) and 2 parts of benzoin isobutyl ether as the photopolymerization initiator.

A stamper 1 was made from a transparent resin as shown in Fig. 2—1 so as to have grooves (depth 0.09 µm, width 0.40 µm) and pits (depth 0.16 µm, width 0.60 µm) and an outer diameter of 300 nm. The transparent stamper was obtained by adhering a cured light-curable resin composition (comprising 50% of polypropylene glycol dimethacrylate, 48% of neopentyl glycol dimethacrylate and 2% of benzoin isopropyl ether as a photopolymerization initiator) having grooves and pits with about 80 µm thick to a polymethyl methacrylate plate with 10 mm thick. A releasable plate 2 having a smooth surface was prepared by baking a dimethylsilicone releasing agent on a surface of nickel circular plate having an outer diameter of 300 mm with a thickness of 5 mm.

A cavity 3—1 with 1.3 mm thick was made by combining the stamper 1 and the releasable plate 2 with the smooth surface in contact with the cavity as shown in Fig. 2—1. Into the cavity 3—1, the resin composition (Sample No. 2) was cast through an inlet 4 under vacuum. Ultraviolet light of wavelength of 320 to 400 nm was irradiated from a high pressure mercury lamp with an intensity of 400 mW/$cm^2$ through the stamper 1 for 40 seconds to cure the resin composition. Then, the releasable plate 2 and the stamper 1 were removed to give a plastic information-recording medium 3—3 as shown in Fig. 2—3.

The plastic information-recording medium thus produced had a thickness of 1.2 mm and precise replicas of the grooves and pits of the stamper.

Properties of the plastic information-recording medium were as follows: the optical retardation at a wavelength of 830 nm was 0.4 nm, the heat distortion temperature was 100°C, the tensile strength was 4905 N/$cm^2$, the light transmittance at a wavelength of 830 nm was 95%, the warpage of the plate was 0.1 mm/ 300 mm in diameter or less. These date show that the medium is excellent as a substrate for optical disc.

These results are shown in Table 1 together with those of Example 1.

Table 1

| Sample No. | | 1 | 2 |
|---|---|---|---|
| Resin composition (parts) | Compound (I)<br>DPCA 30<br>DPCA 60 | 40.8 | 40.8 |
| | Compound (II)<br>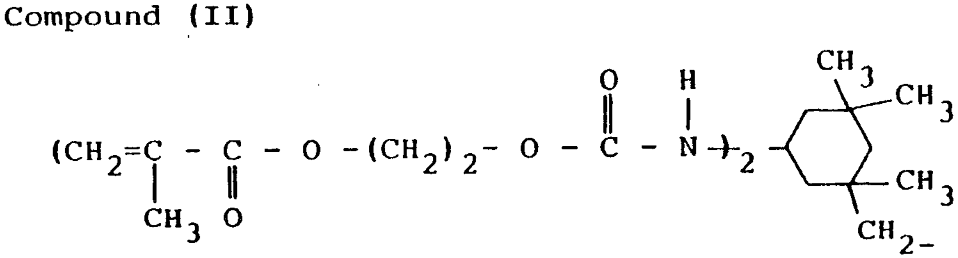<br>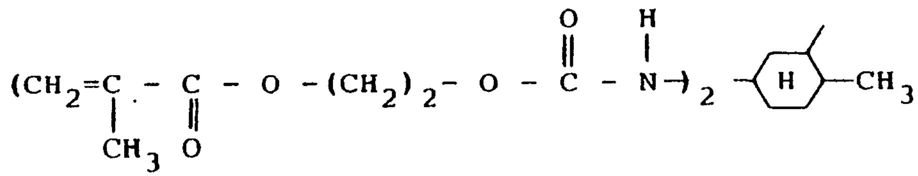 | 30.6 | 30.6 |
| | Compound (III)<br>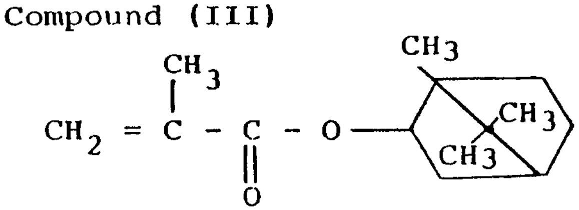<br>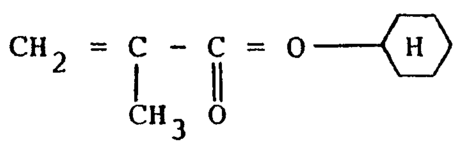 | 28.6 | 28.6 |

Table 1 (Cont'd)

| | | | |
|---|---|---|---|
| | Photopolymerization initiator | | |
| | Benzoin isopropyl ether | 2 | |
| | Benzoin isobutyl ether | | 2 |
| Properties | Curing characteristics | Good | Good |
| | Retardation (nm) (1 mm thick) | 0.4 | 0.3 |
| | Retardation (nm) (1.2 mm thick) | 0.5 | 0.4 |
| | Heat resistance (°C) | 110 | 100 |
| | Tensile strength $(N/cm^2) \times 9.81$ | 550 | 500 |

Example 3

Plastic information-recording mediums were produced in the same manner as described in Example 1 by using the compounds (I), (II) and (III) and photopolymerization initiator as listed in Table 2.

Properties of the plastic information-recording mediums thus produced were measured and listed in Table 2.

As is clear from Table 2, Sample Nos. 3 to 12 show better results in the curing characteristics, retardation, heat resistance and tensile strength than the required ones to be sufficient for practical use. In contrast, Sample Nos. 13 to 24 do not satisfy the required values in all the items, and thus not suitable for practical use.

Table 2

| | | 3 | 4 | 5 | 6 | 7 |
|---|---|---|---|---|---|---|
| Resin composition (Parts) | Compound (I)<br>DPCA 30 | 50 | 5 | 5 | 30 | 50 |
| | Compound (II)<br>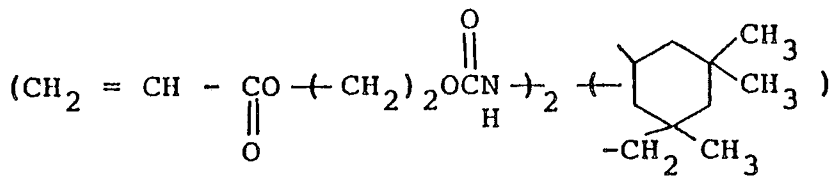 | 45 | 90 | 45 | 20 | 20 |
| | Compound (III)<br>Bornyl methacrylate | 5 | 5 | 50 | 50 | 30 |
| | Photopolymerization initiator: 1-(4-Isopropylphenyl)-2-hydroxy-2-methylpropane-1-on | 2 | 2 | 2 | 2 | 2 |
| Properties | Curing characteristics | Good | Good | Good | Good | Good |
| | Retardation (nm) (at 830 nm, 1 mm thick) | 10 | 4 | 1 | 1 | 4 |
| | Heat resistance (°C) | 140 | 80 | 70 | 90 | 120 |
| | Tensile strength $(N/cm^2) \times 9{,}81$ | 510 | 570 | 510 | 540 | 540 |

- Cont'd -

Table 2 (Cont'd)

| 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|
| 15 | 40 | 25 | 10 | 35 | 100 | 80 | 50 | 30 | - | - | - | - | - | 50 | 70 | 10 |
| 70 | 50 | 50 | 50 | 30 | - | 20 | 50 | 70 | 100 | 70 | 50 | 20 | - | - | 20 | 20 |
| 15 | 10 | 25 | 40 | 35 | - | - | - | - | - | 30 | 50 | 80 | 100 | 50 | 10 | 70 |
| 2 | 2 | 2 | 2 | 2 | 2 | 2 | 2 | 2 | 2 | 2 | 2 | 2 | 2 | 2 | 2 | 2 |
| Good | Good | Good | Good | Good | Good | Good | Good | Good | Good | Good | Good | Insuf-ficient | Insuf-ficient | Good | Good | Insuf-ficient |
| 6 | 10 | 3 | 2 | 3 | 100 | 60 | 40 | 25 | 3 | 3 | 2 | - | - | 2 | 40 | - |
| 100 | 140 | 140 | 70 | 120 | >150 | >150 | 110 | 100 | 60 | 50 | 50 | - | - | 100 | >150 | - |
| 590 | 550 | 600 | 590 | 550 | 140 | 210 | 300 | 490 | 600 | 560 | 380 | - | - | 100 | 100 | - |

Example 4

Plastic information-recording mediums were produced in the same manner as described in Example 1 by using the compounds (I), (II) and (III) or known compounds in place of the compounds (I), (II) and (III), and photopolymerization initiator as listed in Table 3.

Properties of the plastic information-recording mediums thus produced were measured and listed in Table 3.

As is clear from Table 3, Sample Nos. 25 to 30 show better results in the curing characteristics, retardation, heat resistance and tensile strength than the required ones to be sufficient for practical use. In contrast, Sample Nos. 31 and 32 are insufficient in the retardation, heat resistance and tensile strength and not suitable for practical use.

Table 3

| | Sample No. | 25 |
|---|---|---|
| Resin composition (parts) | General compound 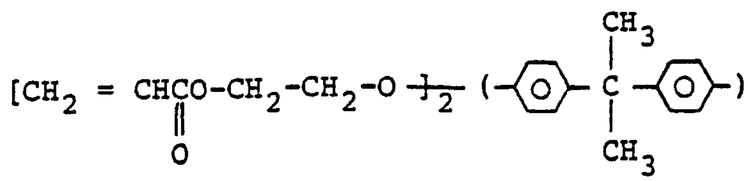 | - |
| | 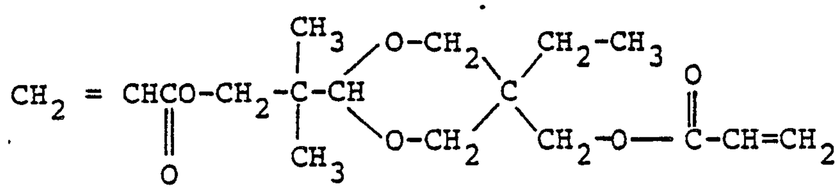 | - |
| | Compound (I)<br>Dipentaerythritol hexamethacrylate<br>DPCA 60 | 20<br>- |
| | Compound (II) 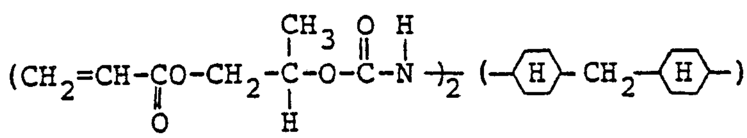 | 50 |
| | 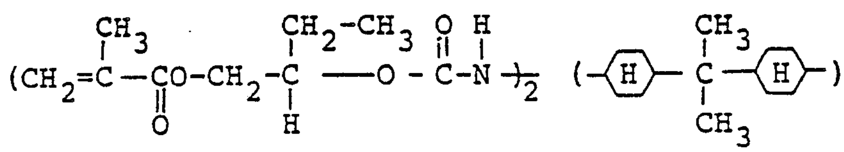 | - |
| | 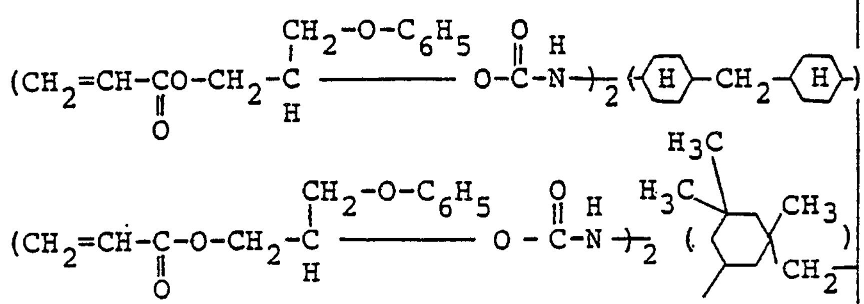 | -<br>- |
| | Compound (III)<br>Isobornyl methacrylate<br>Tricyclodecanyl acrylate | 30<br>- |
| | Photopolymn. Initiator: 1-Hydroxycyclohexyl phenyl ketone | 2 |
| Properties | Curing characteristics<br>Retardation (nm) (at 830 nm, 1 mm thick)<br>Heat resistance (°C)<br>Tensile strength (N/cm2) × 9.81 | Good<br>6<br>110<br>510 |

- Cont'd -

Table 3 (Cont'd)

| 26 | 27 | 28 | 29 | 30 | 31 | 32 |
|---|---|---|---|---|---|---|
| - | - | - | - | - | 100 | - |
| - | - | - | - | - | - | 100 |
| - | - | - | - | - | - | - |
| 30 | 30 | 30 | 30 | 30 | - | - |
| 50 | - | - | - | 50 | - | - |
| - | 50 | - | - | - | - | - |
| - | - | 50 | - | - | - | - |
| - | - | - | 50 | - | - | - |
| 20 | 20 | 20 | 20 | - | - | - |
| - | - | - | - | 20 | - | - |
| 2 | 2 | 2 | 2 | 2 | 2 | 2 |
| Good | Good | Good | Good | Good | Good | Good |
| 2 | 2 | 2 | 2 | 2 | 20 | 70 |
| 110 | 110 | 110 | 110 | 120 | 60 | 80 |
| 520 | 520 | 600 | 600 | 580 | 370 | 220 |

Example 5

Optical disc recording mediums as shown in Fig. 3 were prepared by using the plastic information-recording mediums obtained in Examples 1 to 4 as substrates 3—3 for optical discs as follows. A Te—Sn phase transformation type recording film 6 of 30 nm thick was formed on an information pattern forming surface of the substrate by vacuum deposition, followed by vacuum deposition of $SiO_2$ film 7 thereon in 10 nm thick as a protective coating. Then, polymethyl methacrylate plate 9 or polycarbonate plate 9 of 1 mm thick was laminated thereon tightly using an epoxy resin 8.

Recording and readout properties of the resulting optical discs were evaluated by using a semiconductor laser light of 830 nm. As a result, it was admitted that these optical discs operated normally.

Example 6

A light- or radiation-curable resin composition was prepared by mixing 30 parts of hexaacrylic acid ester of dipentaerythritol derivative (DPCA 60), 60 parts of a reaction product of isophorone diisocyanate (1 mole) and 2-hydroxyethyl acrylate (2 moles), 10 parts of isobornyl methacrylate, and 1 part of 1-hydroxycyclohexylphenyl ketone as a photopolymerization initiator.

A stamper 1 was made from a transparent resin as shown in Fig. 2—1 so as to have grooves (depth 0.16 µm, width 0.60 µm) and pits (depth 0.16 µm, width 0.60 µm) and an outer diameter of 130 mm. The transparent stamper was obtained by adhering a cured light-curable resin composition (comprising 50% of polyethylene glycol dimethacrylate, 48% of hexanediol dimethacrylate and 2% of benzoin isopropyl ether as a photopolymerization initiator) having grooves and pits with about 80 µm thick to a polymethyl methacrylate plate with 10 mm thick.

A releasable plate 2 having a smooth surface was prepared by baking a dimethylsilicone releasing agent on a surface of glass circular plate having an outer diameter of 130 mm with a thickness of 10 mm.

A cavity 3—1 with 1.3 mm thick was made by combining the stamper 1 and the releasable plate 2 with the smooth surface in contact with the cavity as shown in Fig. 2—1. Into the cavity 3—1, the resin composition 3—2 was cast through an inlet 4 under vacuum. High pressure mercury lamps were placed on both sides of the transparent resin-made stamper 1 and the glass circular plate so as to irradiate ultraviolet light of a wavelength of 365 nm with an intensity of 100 $mW/cm^2$. The resin composition in the cavity was cured by the following three irradiating methods:

(a) Ultraviolet light was irradiated only through the transparent stamper 1.

(b) Ultraviolet light was irradiated only through the glass circular plate 2.

(c) Ultraviolet light was irradiated through both the transparent stamper 1 and the glass circular plate 2 at the same time as shown in Fig. 2—2.

Then, the transparent stamper 1 and the glass circular plate were removed to give a plastic information-recording medium as shown in Fig. 2—3.

Individual plastic information-recording mediums thus produced had a thickness of about 1.2 mm and precise replicas of the grooves and pits of the stamper.

When optical disc recording mediums having a hole-punched type recording film of Te and the like on a transparent substrate having grooves and pits are required, the transparent plastic information-recording mediums (substrates) thus produced are exposed to a high-temperature atmosphere of about 100°C for about 1 hour during the crystallization treatment after vacuum deposition of recording film or during the construction of air sandwich-type disc.

In order to know the state of warpage of the substrates, the following test was conducted. Transparent plates having grooves and pits (shown as 3—3 in Fig. 2—3) were produced in the same manner as mentioned above but changing the irradiation conditions (a, b, c) and irradiation time as listed in Table 4. Then, individual plates were subjected to heat treatment at 100°C for 1 hour to measure the degree of warpage. The results were as shown in Table 4.

As is clear from Table 4, when the ultraviolet light was irradiated from only one side (a, b), the warpage takes place slightly by the heat treatment. In contrast, when the ultraviolet light was irradiated from both sides (c) at the same time, no warpage was admitted at all. Further, the irradiation time can be shortened when irradiated from both sides at the same time.

Table 4

| Irradiation method | (a) From stamper side | | (b) From glass plate side | | (c) From both sides | |
|---|---|---|---|---|---|---|
| Irradiation time (sec.) | 30 | 60 | 30 | 60 | 30 | 60 |
| No heat treatment | <0.1 | <0.1 | <0.1 | <0.1 | <0.1 | <0.1 |
| After heat treatment (100°C x 1 hr.) | 0.5 | 0.2 | 0.5 | 0.2 | <0.1 | <0.1 |

Note) degree of warpage: mm/130 mm in diameter

Example 7

The plastic information-recording mediums (substrates) produced in Example 6 by irradiating the ultraviolet light from both sides simultaneously (method c) for 30 seconds were subjected to vacuum deposition of Te-Se alloy to form each hole-punched type recording film on the information pattern forming surface in a thickness of 30 nm.

An optical disc recording medium of air sandwich structure as shown in Figs. 4—1 and 4—2 was prepared by bonding two substrates (3—3) thus obtained with inner and outer ring spacers 12 made from an epoxy resin with 2 mm thick using an epoxy resin adhesive, and curing the epoxy resin adhesive by heating at 100°C for 1 hour.

Recording and readout properties of the resulting optical disc were evaluated by using a semiconductor laser light at 830 nm. As a result, it was admitted that the optical disc operated normally.

**Claims**

1. A process for producing a plastic information-recording medium, comprising the steps of:

casting a light- or radiation-curable resin composition containing acryl or methacryl groups into a cavity formed by a stamper having an information pattern forming surface thereon and a releasable plate having a smooth surface thereon, at least one of the stamper and the releasable plate being transparent,

irradiating a light or radiation through at least one of transparent stamper and transparent releasable plate to cure the resin composition, and

removing the stamper and the releasable plate,

characterized in that the light- or radiation-curable resin composition comprises:

(i) a compound (I) having 4 or more acryl or methacryl groups in one molecule and a viscosity of 3 Pa.s or less at 25°C,

(ii) a compound (II) represented by the formula:

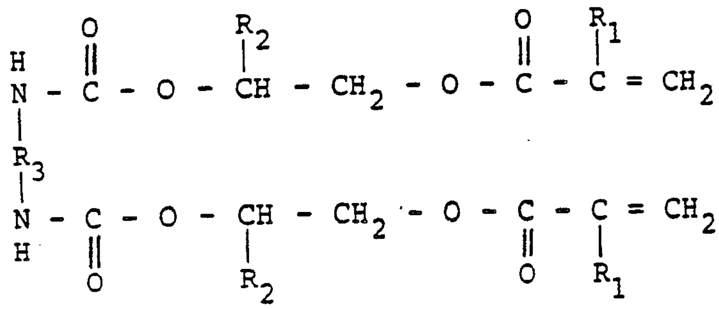

(II)

wherein $R_1$ is hydrogen or a methyl group; $R_2$ is hydrogen, an alkyl group having 1 to 5 carbon atoms, or a group of the formula:

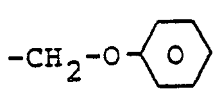 ; $R_3$ is 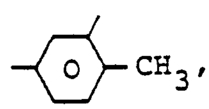,

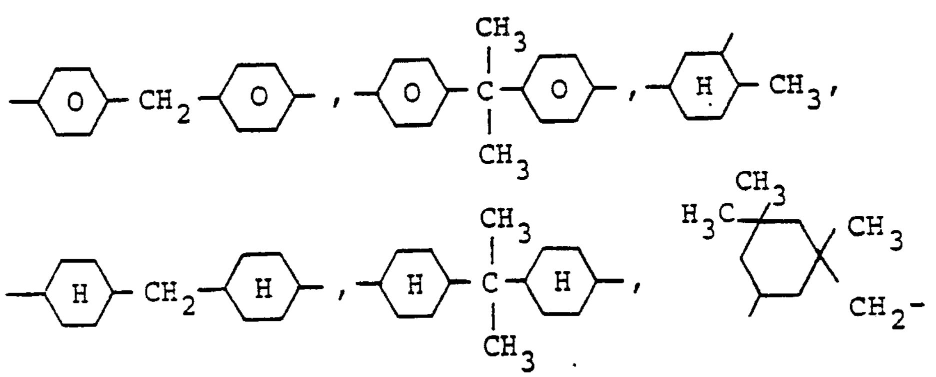

, or $-(CH_2)_m-$.

in which m is an integer of 3 to 10,

(iii) a compound (III) of the formula:

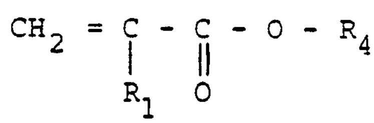

(III)

wherein $R_1$ is as defined above; and $R_4$ is a hydrocarbon group having 6 to 16 carbon atoms, and

(iv) a photopolymerization initiator in an amount of 0.5 to 10 parts by weight per 100 parts by weight of the total of the compounds (I), (II) and (III), and

the compounds (I), (II) and (III) being used in amounts in the closed area of lines A—B—C—D—E—A in the triangular diagram of Fig. 1, wherein individual points A, B, C, D and E have the following values in percents by weight:

| | Compound (I) | Compound (II) | Compound (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

2. A process according to Claim 1, wherein the irradiation of the light or radiation is conducted from one side through the transparent stamper or the transparent releasable plate.

3. A process according to Claim 1, wherein both the stamper and the releasable plate are transparent and the irradiation of a light or radiation is conducted from both sides at the same time.

4. A process according to Claim 1, 2, or 3, wherein the light or radiation is ultraviolet light.

5. A process according to Claim 1, wherein the compound (I) is at least one member selected from the group consisting of pentaerythritol tetraacrylate, pentaerythritol tetramethyacrylate, dipentaerythritol hexaacrylate, dipentaerythritol hexamethacrylate, dipentaerythritol derivative hexaacrylate and dipentaerythritol derivative hexamethacrylate.

6. A process according to Claim 1, wherein the compound (II) is at least one member selected from the group consisting of

a reaction product of 1 mole of 1,1′-methylenebis(4-isocyanatobenzene) and 2 moles of 2-hydroxyethyl acrylate,

a reaction product of 1 mole of 1,1′-methylenebis(4-isocyanatobenzene) and 2 moles of 2-hydroxyethyl methacrylate,

a reaction product of 1 mole of 1,1′-methylenebis(4-isocyanatocyclohexane) and 2 moles of 2-hydroxyethyl acrylate,

a reaction product of 1 mole of 1,1′-methylenebis(4-isocyanatocyclohexane) and 2 moles of 2-hydroxyethyl methacrylate,

a reaction product of 1 mole of isophorone diisocyanate and 2 moles of 2-hydroxyethyl acrylate,

a reaction product of 1 mole of isophorone diisocyanate and 2 moles of 2-hydroxyethyl methacrylate,

a reaction product of 1 mole of isophorone diisocyanate and 2 moles of 2-hydroxypropyl acrylate,

a reaction product of 1 mole of isophorone diisocyanate and 2 moles of 2-hydroxypropyl methacylate,

a reaction product of 1 mole of isophorone diisocyanate and 2 moles of 2-hydroxybutyl acrylate,

a reaction product of 1 mole of isophorone diisocyanate and 2 moles of 2-hydroxybutyl methacrylate,

a reaction product of 1 mole of isophorone diisocyanate and 2 moles of 2-hydroxy-3-phenoxypropyl acrylate, and

a reaction product of 1 mole of isophorone diisocyanate and 2 moles of 2-hydroxy-3-phenoxypropyl methacrylate.

7. A process according to Claim 1, wherein the compound (III) is at least one member selected from the group consisting of cyclohexyl acrylate, cyclohexyl methacrylate, isobornyl acrylate, isobornyl methacrylate, dicyclopentenyl acrylate, dicyclopentenyl methacrylate, tricyclodecanyl acrylate and tricyclodecanyl methacrylate.

8. A light- or radiation-curable resin composition for producing a plastic information-recording medium comprising a resin component containing acryl or methacryl groups and a photopolymerization initiator, characterized in that said resin component comprises

(i) a compound (I) having 4 or more acryl or methacryl groups in one molecule and a viscosity of 3 Pa.s or less at 25°C,

(ii) a compound (II) represented by the formula:

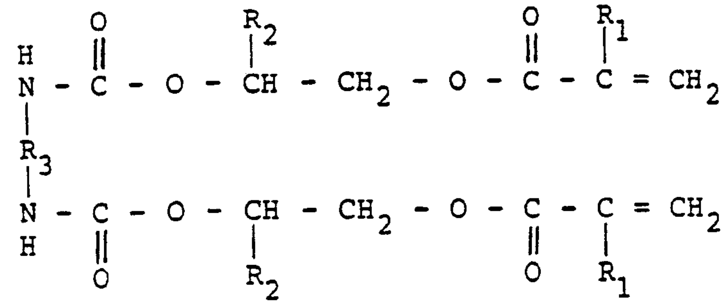

(II)

wherein $R_1$ is hydrogen or a methyl group; $R_2$ is hydrogen, an alkyl group having 1 to 5 carbon atoms, or a group of the formula:

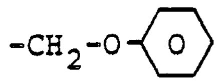 ; $R_3$ is 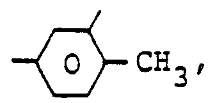,

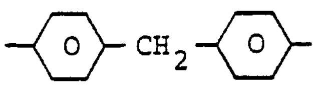, 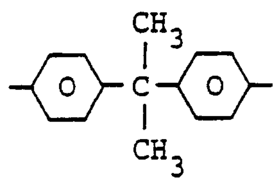, 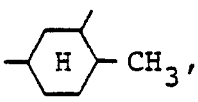,

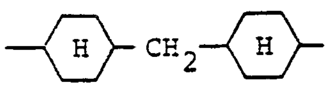, 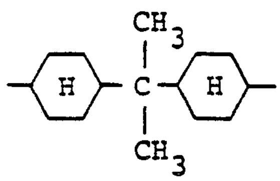, 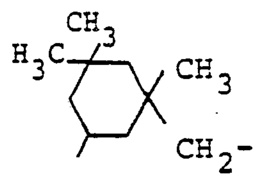, or $-(CH_2)_m-$

in which m is an integer of 3 to 10,

(iii) a compound (III) of the formula:

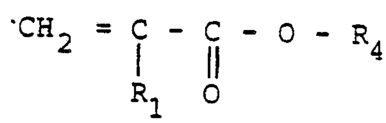

(III)

wherein $R_1$ is as defined above; and $R_4$ is a hydrocarbon group having 6 to 16 carbon atoms, and

(iv) a photopolymerization initiator in an amount of 0.5 to 10 parts by weight per 100 parts by weight of the total of the compounds (I), (II) and (III), and

the compounds (I), (II) and (III) being used in amounts in the closed area of lines A—B—C—D—E—A in the triangular diagram of Fig. 1, wherein individual points A, B, C, D and E have the following values in percents by weight:

| | Compound (I) | Compound (II) | Compound (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

## Patentansprüche

1. Verfahren zur Herstellung eines Kunststoff-Informationsaufzeichnungsmediums mit folgenden Stufen:

Gießen einer durch Licht oder Strahlung härtbaren Kunstharzzusammensetzung mit Akryl- oder Methakrylgruppen in einen Hohlraum, der durch einen Stempel mit einem die Oberfläche bildenden Informationsmuster und einer abtrennbaren Platte mit einer glatten Oberfläche gebildet wird, wobei zumindest entweder der Stempel oder die abtrennbare Plate durchsichtig sind,

Bestrahlen zumindest entweder durch den durchsichtigen Stempel oder die durchsichtige abtrennbare Platte zur Härtung der Harzzusammensetzung, und

Entfernen des Stempels und der abtrennbaren Platte, dadurch gekennzeichnet, daß die durch Licht oder Strahlung härtbare Kunstharzzusammensetzung

(i) eine Verbindung der Formel (I) mit 4 oder mehr Akryl- oder Methakrylgruppen in einem Molekül und einer Viskosität von 3 Pa.s oder darunter bei 25°C, (ii) eine Verbindung der Formel (II)

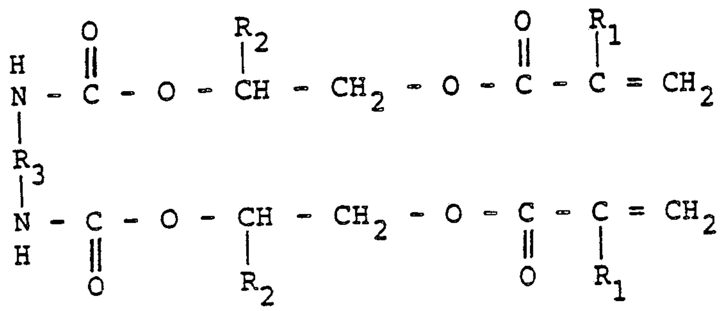

(II)

wobei bedeuten:

$R_1$ Wasserstoff oder Methyl,

$R_2$ Wasserstoff, Alkyl mit 1 bis 5 Kohlenstoffatomen oder einen Rest der Formel

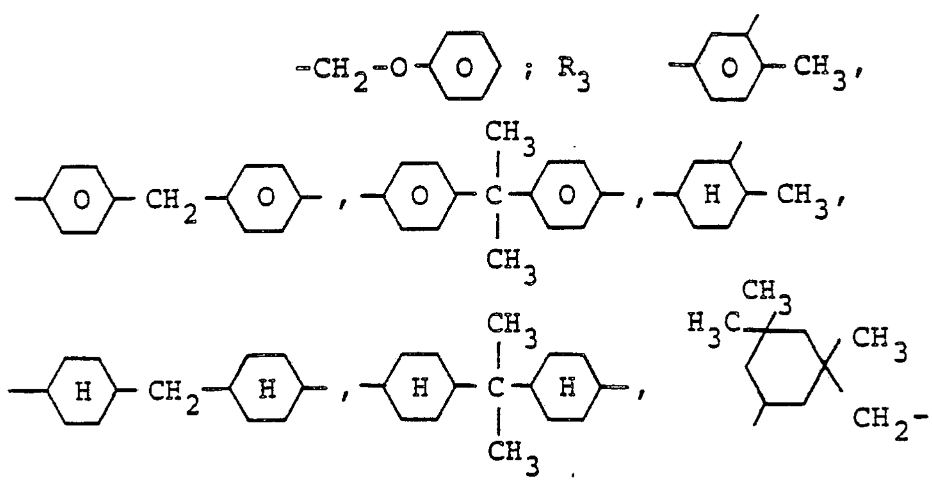

; $R_3$ , oder $-(CH_2)_m-$

mit m = eine ganze Zahl von 3 bis 10,

(iii) eine Verbindung der Formel (III)

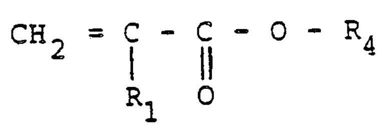

(III)

in der $R_1$ wie oben definiert ist, und

$R_4$ ein Kohlenwasserstoffrest mit 6 bis 16 Kohlenstoffatomen ist, und

(iv) einen Photopolymerisationsinitiator in einer Menge von 0,5 bis 10 Gewichtsteilen je hundert Gewichtsteile der Gesamtmenge an Verbindungen der Formeln (I), (II) und (III) enthält, und

die Verbindungen der Formeln (I), (II) und (III) in Mengen, die innerhalb der Linien A—B—C—D—E—A im dreieckigen Diagramm der Fig. 1 liegen, verwendet werden, wobei die einzelnen Punkte A, B, C, D und E die folgenden Werte in Gew.% haben:

| | Verbindungen der Formeln (I) | (II) | (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

2. Verfahren nach Anspruch 1, in dem die Bestrahlung von einer Seite durch den durchsichtigen Stempel oder die durchsichtige abtrennbare Platte erfolgt.

3. Verfahren nach Anspruch 1, in dem sowohl der Stempel wie auch die abtrennbare Platte durchsichtig sind und die Bestrahlung von beiden Seiten zugleich erfolgt.

4. Verfahren nach einem der Ansprüche 1 bis 3, in dem die Bestrahlung UV-Licht ist.

5. Verfahren nach Anspruch 1, in dem die Verbindung der Formel (I) mindestens eine Verbindung aus der Gruppe von Pentaerythrit-tetraakrylat, Pentaerythrittetramethakrylat, Dipentaerythrit-hexaakrylat, Dipentaerythrit-hexamethakrylat, Dipentaerythritderivat-hexaakrylat und Dipentaerythritderivathexamethakrylat ist.

6. Verfahren nach Anspruch 1, in dem die Verbindung der Formel (II) mindestens eine Verbindung aus der Gruppe von

einem Reaktionsprodukt von 1 mol 1,1′-Methylen-bis(4-isocyanatobenzol) und 2 mol 2-Hydroxyethylakrylat,

einem Reaktionsprodukt von 1 mol 1,1′-Methylen-bis(4-isocyanatobenzol) und 2 mol 2-Hydroxyethylmethakrylat,

einem Reaktionsprodukt von 1 mol 1,1′-Methylen-bis(4-isocyantocyclohexan) und 2 mol 2-Hydroxyethylakrylat,

einem Reaktionsprodukt von 1 mol 1,1′-Methylen-bis(4-isocyantocyclohexan) und 2 mol 2-Hydroxyethylmethakrylat,

einem Reaktionsprodukt von 1 mol Isophoron-diisocyanat und 2 mol 2-Hydroxyethylakrylat,

einem Reaktionsprodukt von 1 mol Isophoron-diisocyanat und 2 mol 2-Hydroxyethylmethakrylat,

einem Reaktionsprodukt von 1 mol Isophoron-diisocyanat und 2 mol 2-Hydroxypropylakrylat,

einem Reaktionsprodukt von 1 mol Isophoron-diisocyanat und 2 mol 2-Hydroxypropylmethakrylat,

einem Reaktionsprodukt von 1 mol Isophoron-diisocyanat und 2 mol 2-Hydroxybutylakrylat,

einem Reaktionsprodukt von 1 mol Isophoron-diisocyanat und 2 mol 2-Hydroxybutylmethakrylat,

einem Reaktionsprodukt von 1 mol Isophoron-diisocyanat und 2 mol 2-Hydroxy-3-phenoxypropylakrylat, und

einem Reaktionsprodukt von 1 mol Isophoron-diisocyanat und 2 mol 2-Hydroxy-3-phenoxypropylmethakrylat ist.

7. Verfahren nach Anspruch 1, in dem die Verbindung der Formel (III) mindestens eine Verbindung aus der Gruppe von Cyclohexylakrylat, Cyclohexylmethakrylat, Isobornylakrylat, Isobornylmethakrylat, Dicyclopentenylakrylat, Dicyclopentenylmethakrylat, Tricyclodekanylakrylat und Tricyclodekanylmethakrylat ist.

8. Durch Licht oder Strahlung härtbare Harzzusammensetzung zur Herstellung eines Kunststoff-Informationsträgermediums mit einer Harzkomponente mit Akryl- oder Methakrylgruppen und einem Photopolymerisationsinitiator, dadurch gekennzeichnet, daß die Harzkomponente

(i) eine Verbindung der Formel (I) mit 4 oder mehr Akryl- oder Methakrylgruppen in einem Molekül und einer Viskosität von 3 Pa.s. oder darunter bei 25°C,

(ii) eine Verbindung der Formel (II)

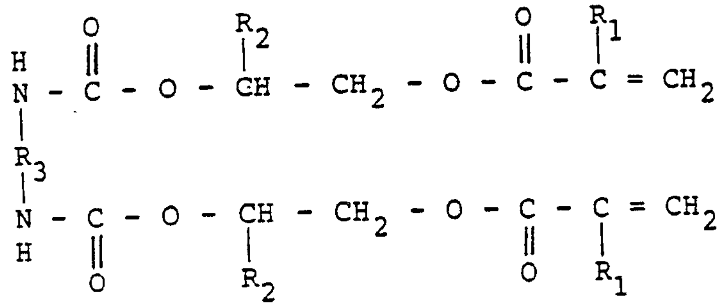

(II)

wobei bedeuten:

$R_1$ Wasserstoff oder Methyl,

$R_2$ Wasserstoff, Alkyl mit 1 bis 5 Kohlenstoffatomen oder einen Rest der Formel

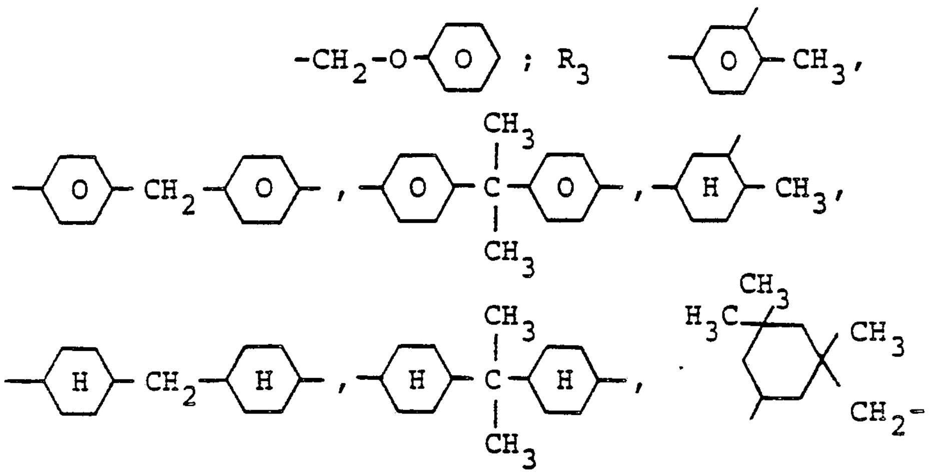

; $R_3$ ... , oder $-(CH_2)_m-$

mit m = eine ganze Zahl von 3 bis 10,

(iii) eine Verbindung der Formel (III)

$$CH_2 = \underset{R_1}{\underset{|}{C}} - \underset{O}{\underset{||}{C}} - O - R_4 \qquad (III)$$

in der $R_1$ wie oben definiert ist, und

$R_4$ ein Kohlenwasserstoffrest mit 6 bis 16 Kohlenstoffatomen ist, und

(iv) einen Photopolymerisationsinitiator in einer Menge von 0,5 bis 10 Gewichtsteilen je hundert Gewichtsteile der Gesamtmenge an Verbindungen der Formeln (I), (II) und (III) enthält, und

die Verbindungen der Formeln (I), (II) und (III) in Mengen, die innerhalb der Linien A—B—C—D—E—A im dreieckigen Diagramm der Fig. 1 liegen, verwendet werden, wobei die einzelnen Punkte A, B, C, D und E die folgenden Werte in Gew.% haben:

| | Verbindungen der Formeln (I) | (II) | (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

**Revendications**

1. Procédé pour la production d'un moyen d'enregistrement d'informations, en matière plastique, comprenant les étapes consistant à

couler une composition de résine durcissable a la lumière ou par irradiation, contenant des groupes acryle ou méthacryle, dans une cavité formée par un poinçon qui présente une surface portant un motif d'informations et par une plaque amovible qui présente une surface lisse, au moins l'un du poinçon et de la plaque amovible étant transparent,

à irradier par la lumière ou par irradiation à travers au moins l'un du poinçon transparent et de la plaque amovible transparente, pour durcir la composition de résine, et

à éliminet de poinçon et la plaque amovible,

caractérisé en ce que la composition de résine durcissable à la lumière ou par irradiation comprend

(i) un composé (I) ayant au moins 4 groupes acryle ou méthacryle par molècule et une viscosité de 3 PA.s ou moins à 25°C,

(ii) un composé (II) représenté par la formule:

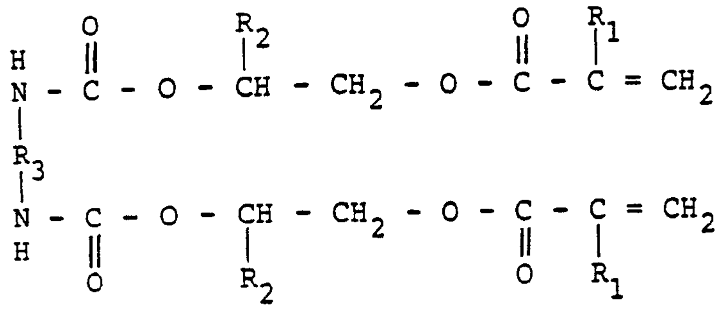

(II)

dans laquelle $R_1$ représente l'hydrogène ou un groupe méthyle; $R_2$ représente l'hydrogène, un groupe alkyle ayant 1 à 5 atomes de carbone, ou un groupe de formule:

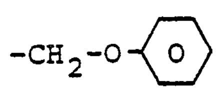 ; $R_3$ est 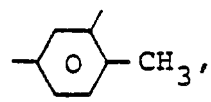,

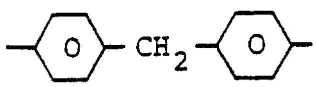, 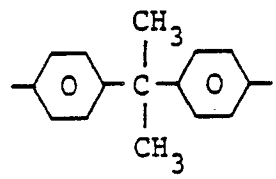, 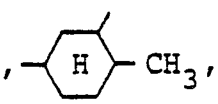,

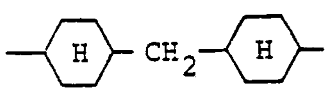, 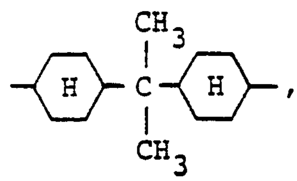, 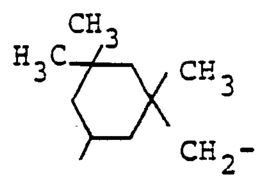, ou $-(CH_2)_m-$

où m est un nombre entier de 3 à 10,

(iii) un composé (III) de formule:

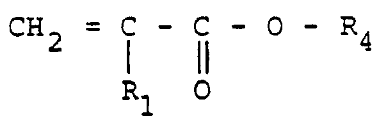

(III)

dans laquelle $R_1$ est défini comme ci-dessus; et $R_4$ représente un groupe hydrocarboné ayant 6 à 16 atomes de carbone, et

(iv) un amorceur de photopolymérisation en une proportion de 0,5 à 10 parties en poids pour 100 parties en poids de la totalité des composés (I), (II) et (III), et

les composés (I), (II) et (III) étant utilisés en des proportions comprises dans la zone fermée par les lignes A—B—C—D—E—A du diagramme ternaire de la figure 1, les points individuels, A, B, C, D et E ayant les valeurs suivantes en pourcents en poids:

| | Composé (I) | Composé (II) | Composé (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

2. Procédé selon la revendication 1, dans lequel l'irradiation par lumière ou par irradiation est conduite par un côté à travers le poinçon transparent ou la plaque amovible transparente.

3. Procédé selon la revendication 1, dans lequel à la fois le poinçon et la plaque amovible sont transparents et l'irradiation par la lumière ou par irradiation est conduite par les deux côtés à la fois.

4. Procédé selon la revendication 1, 2 ou 3, dans lequel la lumière ou l'irradiation est de la lumière ultraviolette.

5. Procédé selon la revendication 1, dans lequel le composé (I) est au moins un composé dans le groupe constitué par le tétraacrylate de pentaérythritol, le tétraméthacrylate de pentaérythritol, l'hexaacrylate de dipentaérythritol, l'hexaméthacrylate de dipentaérythritol, l'hexaacrylate d'un dérivé du dipentaérythritol et l'hexaméthacrylate d'un dérivé du dipentaérythritol.

6. Procédé selon la revendication 1, dans lequel le composé (II) est au moins un composé choisi dans le groupe constitué par

un produit de réaction de 1 mole de 1,1'-méthylène-bis-(4-isocyanatobenzène) et de 2 moles d'acrylate de 2-hydroxyéthyle,

un produit de réaction de 1 mole de 1,1'-méthylène-bis-(4-isocyanatobenzène) et de 2 moles de méthacrylate de 2-hydroxyéthyle,

un produit de réaction de 1 mole de 1,1'-méthylène-bis-(4-isocyanatocyclohexane) et de 2 moles d'acrylate de 2-hydroxyéthyle,

un produit de réaction de 1 mole de 1,1'-méthylène-bis-(4-isocyanatocyclohexane) et de 2 moles de méthacrylate de 2-hydroxyéthyle,

un produit de réaction de 1 mole d'isophorone diisocyanate et de 2 moles d'acrylate de 2-hydroxyéthyle,

un produit de réaction de 1 mole d'isophorone diisocyanate et de 2 moles de méthacrylate de 2-hydroxyéthyle,

un produit de réaction de 1 mole d'isophorone diisocyanate et de 2 moles d'acrylate de 2-hydroxypropyle,

un produit de réaction de 1 mole d'isophorone diisocyanate et de 2 moles de méthacrylate de 2-hydroxypropyle,

un produit de réaction de 1 mole d'isophorone diisocyanate et de 2 moles d'acrylate de 2-hydroxybutyle,

un produit de réaction de 1 mole d'isophorone diisocyanate et de 2 moles de méthacrylate de 2-hydroxybutyle,

un produit de réaction de 1 mole d'isophorone diisocyanate et de 2 moles d'acrylate de 2-hydroxy-3-phénoxypropyle, et

un produit de réaction de 1 mole d'isophorone diisocyanate et de 2 moles de méthacrylate de 2-hydroxy-3-phénoxypropyle.

7. Procédé selon la revendication 1, dans lequel le composé (III) est au moins un composé choisi dans le groupe constitué par l'acrylate de cyclohexyle, le méthacrylate de cyclohexyle, l'acrylate d'isobornyle, le méthacrylate d'isobornyle, l'acrylate de dicyclopentyle, le méthacrylate de dicyclopentyle, l'acrylate de tricyclodécanyle et le méthacrylate de tricyclodécanyle.

8. Composition de résine durcissable à la lumière ou par radiation, pour la production d'un moyen d'enregistrement d'informations en matière plastique, comprenant un composant résine contenant des groupes acryle ou méthacryle, et un amorceur de photopolymérisation, caractérisé en ce que ledit composant résine comprend

(i) un composé (I) ayant au moins 4 de groupes acryle ou méthacryle par molécule et une viscosité de 3 PA.s ou moins à 25°C,

(ii) un composé (II) représenté par la formule

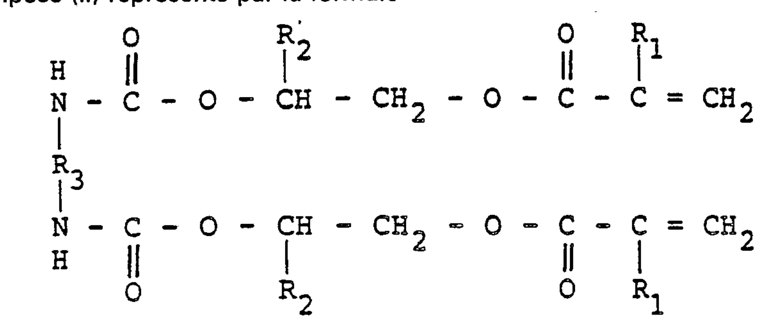

(II)

dans laquelle $R_1$ représente l'hydrogène ou un groupe méthyle; $R_2$ représente l'hydrogène, un groupe alkyle ayant 1 à 5 atomes de carbone, ou un groupe de formule:

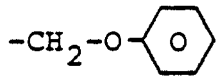 ; $R_3$ est 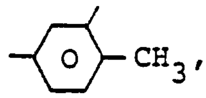

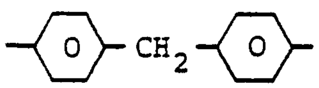 , 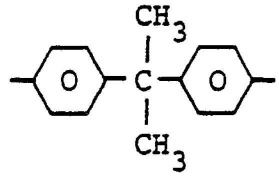 , 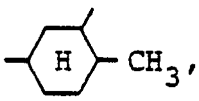

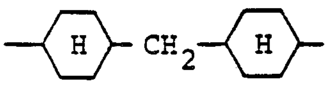 , 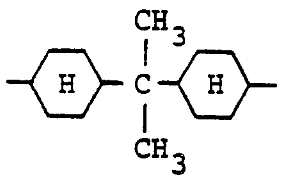 , 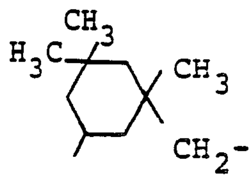 , (ou $-(CH_2)_m-$)

dans laquelle m est un nombre entier de 3 à 10,

(iii) un composé (III) de formule:

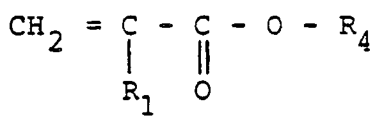 (III)

où $R_1$ est défini comme ci-dessus; et $R_4$ représenté un groupe hydrocarboné ayant 6 à 16 atomes de carbone, et

(iv) un amorceur de polymérisation en une proportion de 0,5 à 10 parties en poids pour 100 parties en poids de la totalité des composés (I), (II) et (III), et

les composés (I), (II) et (III) étant utilisés en des proportions comprises dans la zone fermée par les lignes A—B—C—D—E—A du diagramme ternaire de la figure 1, les points individuels A, B, C, D et E ayant les valeurs suivantes en pourcents en poids:

| | Composé (I) | Composé (II) | Composé (III) |
|---|---|---|---|
| A | 50 | 45 | 5 |
| B | 5 | 90 | 5 |
| C | 5 | 45 | 50 |
| D | 30 | 20 | 50 |
| E | 50 | 20 | 30 |

FIG. 1

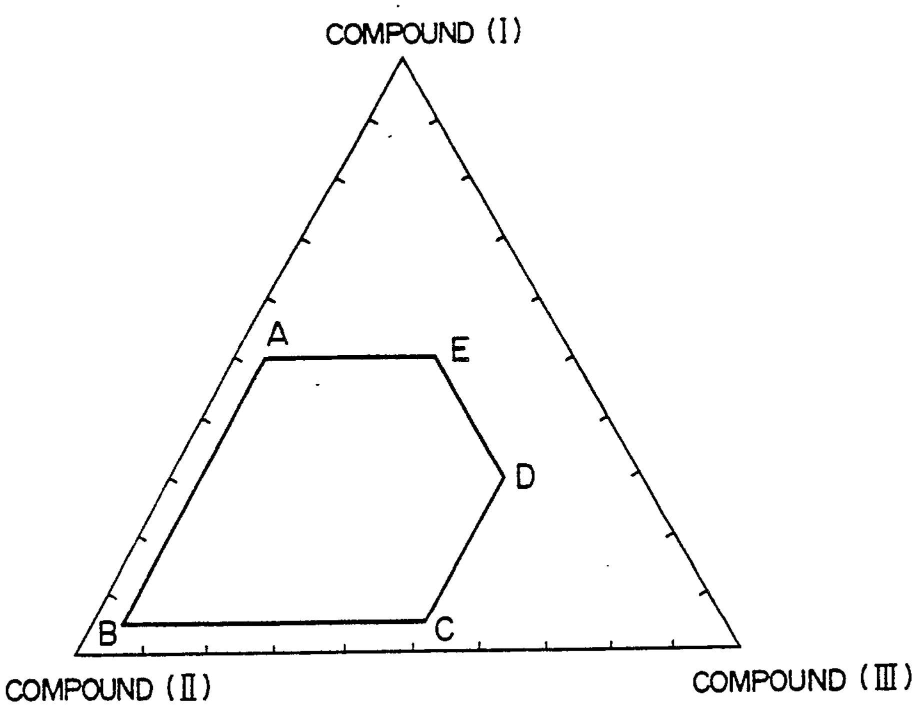

FIG. 2-1

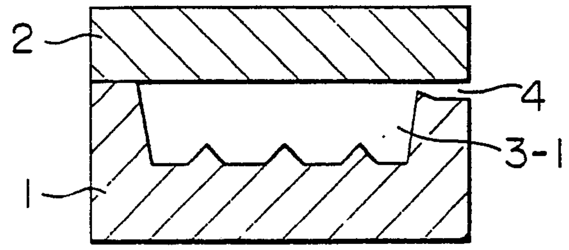


FIG. 2-2

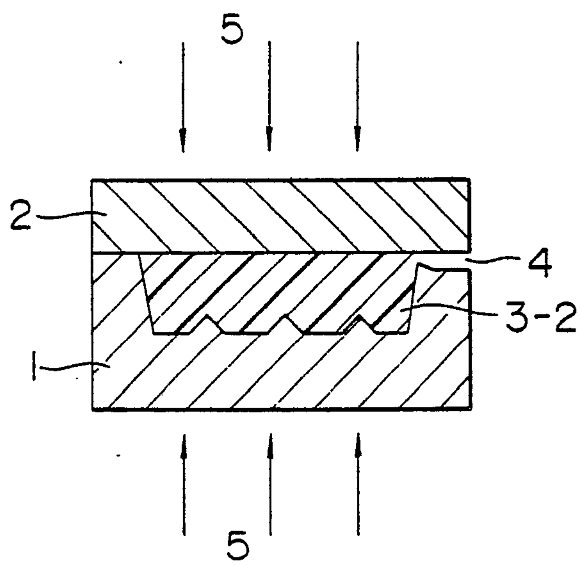


FIG. 2-3

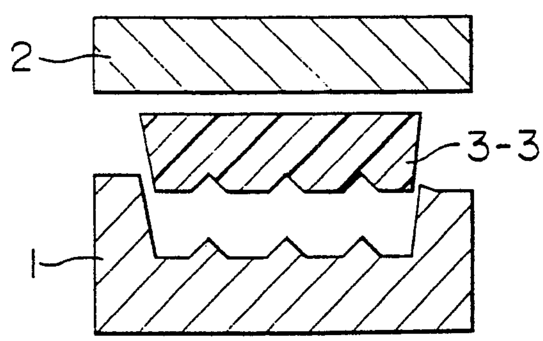

FIG. 3

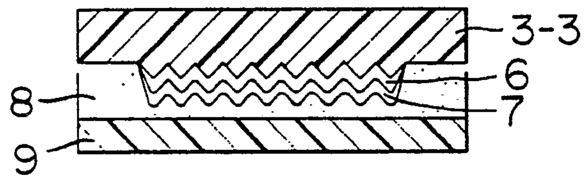


FIG. 4-1

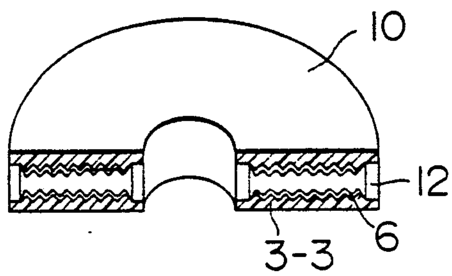


FIG. 4-2